# EUROPÄISCHE PATENTANMELDUNG

(11) **EP 1 328 034 A2**
(43) Veröffentlichungstag der Anmeldung: **16.07.2003**
(21) Anmeldenummer: 03000352.9
(22) Anmeldetag: 10.01.2003
(51) Int. Cl.: H01M 8/10, H01M 8/04

(54) **Verfahren und Vorrichtung zum Aufbringen einer Anpresskraft auf die Flächenelektroden einer Brennstoffzelle/eines Hydrolyseurs**

(30) Priorität: 15.01.2002 DE 10201148
(71) Anmelder: H2-Interpower Brennstoffzellensysteme GmbH, 91126 Schwabach (DE)
(72) Erfinder: Ruthrof, Klaus, 90489 Nürnberg (DE); Grosser, Armin, 91154 Roth (DE); Gunkel, Christian, 91126 Schwabach (DE); Dutschke, Bernhard, 90433 Nürnberg (DE)
(74) Vertreter: Patentanwälte Rehberg + Hüppe

(57) **Zusammenfassung**

Zum Aufbringen einer Anpresskraft auf die Flächenelektroden (8, 9) einer zylindermantel- oder wickelförmigen Brennstoffzelle (1), die einen Schichtaufbau (2) mit einer zentralen Protonenaustauschmembran (5), mit die Protonenaustauschmembran (5) bedeckenden Diffusorschichten (6, 7) und mit den die Diffusorschichten (6, 7) rückwärtig abstützenden Flächenelektroden (8, 9) aufweist, wobei der Schichtaufbau (2) auf einem Kern (3) angeordnet ist, wird der Durchmesser des Kerns (3) aufgewertet. Dieses Prinzip ist auch bei einem Hydrolyseur mit demselben Schichtaufbau (2) anwendbar.

## Beschreibung

Die Erfindung bezieht sich auf ein Verfahren zum Aufbringen einer Anpresskraft auf die Flächenelektroden von zylindermanteloder wickelförmigen Brennstoffzellen oder Hydrolyseuren, die einen Schichtaufbau mit einer zentralen Protonenaustauschmembran, mit die Protonenaustauschmembran bedeckenden Diffusorschichten und mit den die Diffusorschichten rückwärtig abstützenden Flächenelektroden aufweist, wobei der Schichtaufbau auf einem Kern angeordnet ist. Der Kern kann beispielsweise ein Rohrkörper oder auch ein massiver Kern sein. Weiterhin bezieht sich die Erfindung auf solche Brennstoffzellen bzw. Hydrolyseure selbst, wobei im Folgenden der Einfachheit halber zwar zum Teil nur Brennstoffzellen erwähnt, aber immer auch Hydrolyseure mit entsprechendem Aufbau in gleicher Weise gemeint sind.

Bei bekannten PEM-Brennstoffzellen, wobei das Kürzel PEM für Protonenaustauschmembran oder auch Polymer-Elektrolyt-Membran steht und die einen Schichtaufbau mit die Protonenaustauschmembran bedeckenden Diffusorschichten und mit die Diffusorschichten rückwärtig abstützenden Flächenelektroden aufweisen, ist es wichtig, eine nicht unerhebliche Anpresskraft auf die Flächenelektroden aufzubringen. Die Anpresskraft ist notwendig, um Kontaktwiderstände zwischen den Flächenelektroden und den Diffusorschichten und auch zwischen den Diffusorschichten und der Protonenaustauschmembran klein zu halten. Diese Kontaktwiderstände bestimmen den elektrischen Innenwiderstand und damit die aus der Brennstoffzelle durch kalte Oxydation eines Brenngases gewinnbare elektrische Leistung.

Bei Brennstoffzellen mit einfachem oder in mehreren Lagen gestapeltem ebenen Schichtaufbau wird die Anpresskraft auf die Flächenelektroden häufig dadurch bewirkt, dass der Schichtaufbau zwischen massiven Abstützplatten angeordnet wird, die durch Spannschrauben im Randbereich gegeneinander verspannt werden.

Bei einem Verfahren der eingangs beschriebenen Art betreffend eine Brennstoffzelle, deren Schichtaufbau auf einem Rohrkörper angeordnet ist, wird die Anpresskraft durch straffes Aufwickeln einer elastischen Schnur auf den Schichtaufbau erzielt.

Bei einer wickelförmigen Brennstoffzelle ist es auch bekannt, die Anpresskraft auf die Flächenelektroden durch eine Zugkraft auf den Schichtaufbau bei seinem Aufwickeln auf den Kern aufzubringen.

In beiden Fällen muss aber die am Ende des Aufbaus der Anordnung der Brennstoffzelle erreichte Anpresskraft hingenommen werden. Sie ist nachträglich nicht vergrößerbar, ohne dass der Aufbau der Brennstoffzelle wieder zerlegt und neu zusammengesetzt wird. So ist es ausgesprochen schwierig, einen bestimmten Mindestwert der Anpresskraft zuverlässig einzuhalten oder sogar einen ganz bestimmten Wert der Anpresskraft einzustellen.

Der Erfindung liegt die Aufgabe zugrunde, ein Verfahren und Brennstoffzellen der eingangs beschriebenen Art aufzuzeigen, mit denen die Anpresskraft auf die Flächenelektroden definiert aufbringbar sind, auch nachdem der konstruktive Aufbau der jeweiligen Brennstoffzelle bzw. des jeweiligen Hydrolyseurs fertiggestellt ist.

Erfindungsgemäß wird diese Aufgabe bei einem Verfahren der eingangs beschriebenen Art dadurch gelöst, dass der Durchmesser des Kerns, auf dem der Schichtaufbau angeordnet ist, aufgeweitet wird. Durch das Aufweiten des Durchmessers des Kern wird eine radiale Kraft auf den auf dem Kern angeordneten Schichtaufbau ausgeübt. Diese Kraft beaufschlagt den Schichtaufbau in der gewünschten Richtung mit einer Anpresskraft zunächst auf die innere Flächenelektrode. Weiterhin wird der Schichtaufbau in der Haupterstreckungsrichtung seiner Bestandteile auf Dehnung beansprucht. Allein hierdurch wird eine reactio zu der radialen Durchmesseraufweitung des Kerns aufgebaut, die in der Folge auch eine Anpresskraft auf die dem Kern jeweils abgewandte Flächenelektrode aufbaut. Zudem wird durch die Dehnungsbeanspruchung des Schichtaufbaus sichergestellt, dass seine einzelnen Bestandteile glattgezogen werden, so dass keine erhöhten Kontaktwiderstände beispielsweise durch wellige Diffusorschichten auftreten, an denen weder die Protonenaustauschmembran noch die jeweilige Flächenelektrode ganzflächig anliegen können, was für einen geringen Kontaktwiderstand unerlässlich ist. Durch eine abgestimmte Aufweitung des Durchmessers des Kerns kann die gewünschte Anpresskraft sehr definiert aufgebracht werden. Sie kann durch integrierte Sensoren überwacht werden. Sie kann aber auch einfach solange erhöht werden, bis ein gewünschter Innenwiderstand der Brennstoffzelle zuverlässig unterschritten wird.

Die Aufweitung des Durchmessers des Kerns kann beispielsweise durch hydraulische oder pneumatische Beaufschlagung einer Druckkammer in dem Kern erfolgen. Dabei versteht es sich, dass diese Druckkammer verformbare oder verschiebbare Wände aufweisen muss, damit sich der Kern aufgrund der Beaufschlagung der Druckkammer aufweiten kann.

Der Kern kann auch durch axiales Zusammendrücken von Konuselementen aufgeweitet werden. Hierbei kann es sich um in axialer Richtung ganz oder teilweise geschlitzte Konuselemente handeln.

Es ist auch möglich, den Kern durch thermisches oder chemisches Auslösen einer irreversiblen Volumenänderung aufzuweiten. Es sind Materialien, insbesondere Dichtungsmaterialien, bekannt und kommerziell verfügbar, die ihr Volumen bei einer Erwärmung in einem bestimmten Temperaturbereich irreversibel vergrößern. D.h., die Volumenvergrößerung geht zumindest teilweise auch bei anschießender Wiederabsenkung der Temperatur nicht verloren.

Vorzugsweise wird bei dem neuen Verfahren der Schichtaufbau dauerhaft nach außen durch einen Zylindermantel abgestützt, der den wesentlichen Anteil der reactio zu der von der Aufweitung des Kerns herrührenden Kraft aufbaut. Mit anderen Worten wird der Schichtaufbau der Brennstoffzelle dann zwischen dem Kern und dem Zylindermantel zusammengedrückt. Der Zylindermantel kann durchaus elastisch sein, solange seine Elastizität kleiner als diejenige des Schichtaufbaus ist, damit er sich tatsächlich wesentlich an dem Aufbau der Reaktion für die Anpresskraft beteiligt.

Eine neue Brennstoffzelle der eingangs beschriebenen Art kann dadurch gekennzeichnet sein, dass der Durchmesser des Kerns aufweitbar ist. Hierzu kann der Kern eine hydraulisch oder beaufschlagbare Druckkammer mit einer verformbaren oder verschiebbaren Wandung aufweisen.

Der Kern kann auch axial zusammendrückbare Konuselemente aufweisen. In einer weiteren konkreten Ausführungsform kann das Volumen des Kerns thermisch oder chemisch irreversibel vergrößerbar sein. Hierzu kann der Kern zumindest einen Anteil aus einem Material aufweisen, dessen Volumen durch thermische Anregung irreversibel vergrößerbar ist. Wie bereits erwähnt wurde, sind solche Materialien grundsätzlich bekannt.

Bei Verwendung eines Material für den Kern, dessen Volumen durch thermische Anregung irreversibel vergrößerbar ist, kann das fertige Brennstoffzellenprodukt einen Kern aufweisen, der nicht mehr aufweitbar ist, weil er bereits vollständig aufgewertet wurde. In diesem Fall ist eine Brennstoffzelle der eingangs beschriebenen Art erfindungsgemäß dadurch gekennzeichnet, dass der Kern zumindest einen Anteil aus einem Material aufweist, dessen Volumen durch thermische Anregung irreversibel vergrößerbar ist, wobei diese Volumenvergrößerung zumindest teilweise ausgelöst ist.

Bevorzugt ist es bei den neuen Brennstoffzellen, wenn der Schichtaufbau nach außen durch einen Zylindermantel abgestützt ist, dessen Elastizität kleiner als diejenige des Schichtaufbaus ist.

Die Erfindung wird im folgenden anhand von Ausführungsbeispielen näher erläutert und beschrieben, dabei zeigt:
- Fig. 1: einen schematischen Querschnitt durch eine zylindermantelförmige Ausführungsform der neuen Brennstoffzelle,
- Fig. 2: einen schematischen Querschnitt durch eine wickeiförmige Ausführungsform der neuen Brennstoffzelle,
- Fig. 3: einen schematischen Querschnitt durch den Kern der neuen Brennstoffzelle in einer ersten Ausführungsform,
- Fig. 4: einen schematischen Querschnitt durch den Kern der neuen Brennstoffzelle in einer zweiten Ausführungsform,
- Fig. 5: einen schematischen Querschnitt durch den Kern der neuen Brennstoffzelle in einer dritten Ausführungsform und
- Fig. 6: einen schematischen Längsschnitt durch den Kern der neuen Brennstoffzelle in einer vierten Ausführungsform.

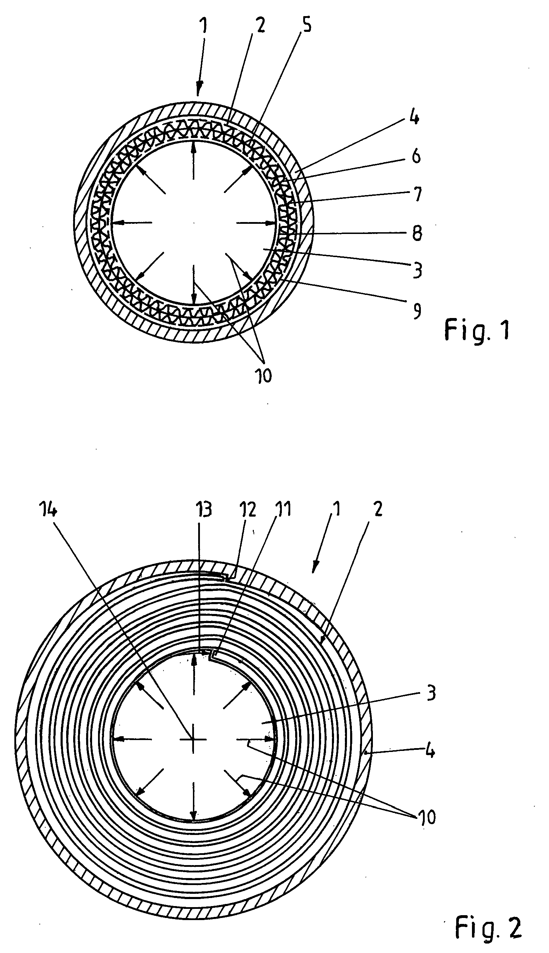

Die in Fig. 1 skizzierte Brennstoffzelle 1 weist einen Schichtaufbau 2 auf, der auf einem Kern 3 angeordnet und koaxial von einem Zylindermantel 4 umgeben ist. Der Kern 3 ist selbst zylindermantelförmig und weist in koaxialer Anordnung eine zentrale Protonenaustauschmembran 5, zwei diese bedeckende Diffusorschichten 6 und 7 sowie zwei die Diffusorschichten 6 und 7 rückwärtig abstützende Flächenelektroden 8 und 9 auf. Die Flächenelektrode 8 stützt sich ihrerseits an dem Kern 3 ab, während die Flächenelektrode 9 von dem Zylindermantel 4 abgestützt wird. Details der Gasversorgung der Diffusorschichten 6 und 7 und der Stromabfuhr von den Flächenelektroden 8 und 9 bei der Erzeugung von Strom in der Brennstoffzelle 1 sind weder in Fig. 1 noch einer der nachfolgenden Fig. dargestellt. Auf diese Details kommt es für die vorliegende Erfindung auch nicht an. Ebensowenig muss der gezeigte Aufbau tatsächlich als Brennstoffzelle verwendet, d.h. zur Erzeugung von Strom eingesetzt werden. Er kann auch als Hydrolyseur zum Aufspalten von Wasser in Wasserstoff und Sauerstoff verwendet werden. Wesentlich ist jedoch immer, dass eine hinreichend große Anpresskraft der Flächenelektroden 8 und 9 auf die Diffusorschichten 6 und 7 aufgebaut wird, damit die Kontaktwiderstände zwischen den Flächenelektroden 8 und 9 und den Diffusorschichten 6 und 7 sowie zwischen den Diffusorschichten 6 und 7 und der Protonenaustauschmembran 5 möglichst klein bleiben. Diese Kontaktwiderstände sind bedeutend für den Innenwiderstand der Brennstoffzelle 1 und damit ihrer gesamten Leistungsfähigkeit. Um diese Anpresskräfte aufzubauen, ist es vorgesehen, den Kern 3 in Richtung der in Fig. 1 eingezeichneten Pfeile 10 in seinem Durchmesser aufzuweiten. Hierdurch wird unmittelbar die angrenzende Flächenelektrode 8 in der gewünschten Richtung beaufschlagt. Die nötige reactio auf die gegenüberliegende Flächenelektrode 9 wird einerseits durch den Zylindermantel 4 aber auch durch die Elastizität des Schichtaufbaus 3 selbst aufgebaut. Bevorzugt ist es jedoch, wenn der Zylindermantel 4 den wesentlichen Teil der Reaktion aufbaut und deshalb eine geringere Elastizität als der Schichtaufbau 2 aufweist. Durchaus ist es aber erwünscht, wenn der Schichtaufbau 2 durch die Aufweitung des Durchmessers des Kerns 3 leicht gedehnt wird, um etwaige Verwerfungen der Flächenelektroden 8 und 9, der Diffusorschichten 6 und 7 oder der Protonenaustauschmembran 5 glattzuziehen.

Die in Fig. 2 dargestellte Brennstoffzelle 1 entspricht im wesentlichen derjenigen gemäß Fig. 1, außer dass der Schichtaufbau 2 hier nicht in seinen Einzelbestandteilen dargestellt ist, sondern nur als ein Band und dass der Schichtaufbau 2 hier nicht nur einmal zylindermantelförmig um den Kern 3 herum verläuft, sondern als Wickel mit mehreren Lagen. Dabei weist der Schichtaufbau 2 ein inneres Ende 11 und ein äußeres Ende 12 auf, die es in der Ausführungsform der Brennstoffzelle 1 gemäß Fig. 1 so nicht gibt. Die Aufbringung der Anpresskraft auf die Flächenelektroden des Schichtaufbaus 2 erfolgt aber auch gemäß Fig. 2 durch eine Aufweitung des Durchmessers des Kerns 3 in Richtung der Pfeile 10. Dabei kann es hier zusätzlich zu einer induzierten Drehbewegung des Kerns 3 um seine Achse 14 in Richtung eines Drehpfeils 13 kommen, weil sich der Schichtaufbau 2 unter Relativverschiebung seiner Wickellagen zunächst weitmöglichst entwickelt, bis er durch den Zylindermantel 4 abgestützt wird.

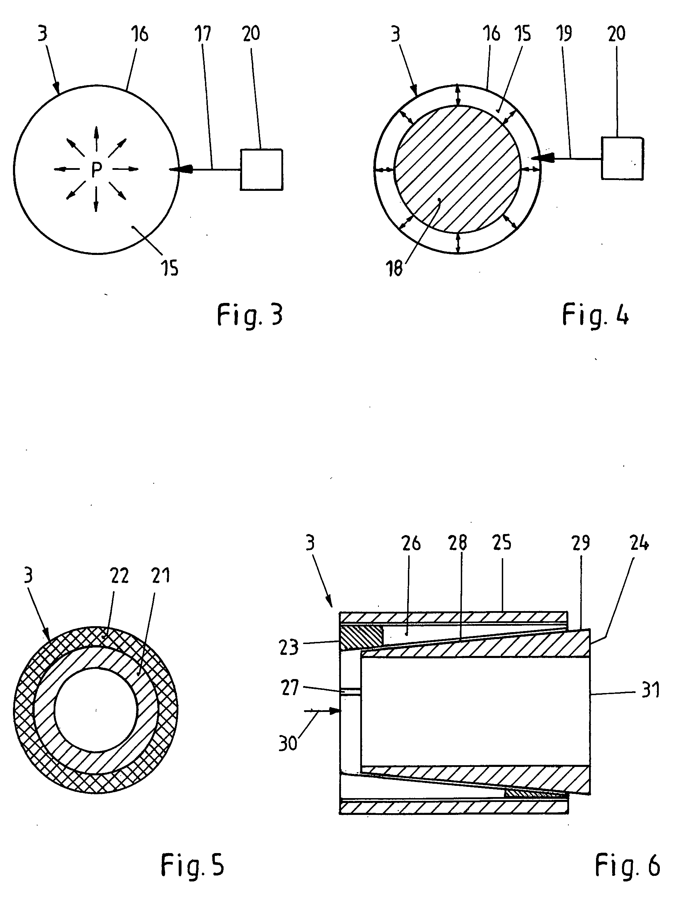

In den folgenden Fig. sind verschiedene Ausführungsformen des Kerns 3 dargestellt, um seinen Durchmesser aufzuweiten. Fig. 3 skizziert dabei eine Druckkammer 15 im Inneren des Kerns 3, die durch eine Druckquelle 20 mit Druckluft 17 pneumatisch beaufschlagbar ist. Da die Druckkammer 15 eine elastische Wandung 16 aufweist, führt eine Vergrößerung des Drucks p in der Druckkammer 15 zu der gewünschten Aufweitung des Volumens bzw. des Durchmessers des Kerns 13. Die Druckkammer 15 macht hierbei das wesentliche Volumen des Kerns 3 gemäß Fig. 3 aus.

Gemäß Fig. 4 ist die Druckkammer 15 des Kerns 3 nur als Zylindermantel um einen massiven Abstützkern 18 vorgesehen. Außerdem ist die Druckkammer 15 hier zur Beaufschlagung mit einem Hydraulikmedium 19 von einer Druckquelle 20 ausgebildet. Die hydraulische Beaufschlagung mit dem Hydraulikmedium 19 bewirkt unmittelbar eine Volumenvergrößerung der Druckkammer 15 zwischen dem Abstützkern 18 und der elastischen Wandung 16, womit die gewünschte Durchmesservergrößerung des Kerns 3 erreicht wird.

Gemäß Fig. 5 wird der Kern 3 von einem Rohrkörper 21 ausgebildet, auf dem ein Material 22 angeordnet ist, dessen Volumen bei Temperaturerhöhung ansteigt, wobei dieser Volumenanstieg zumindest teilweise irreversibel ist, d.h. auch nach Wiederabsenkung der Temperatur verbleibt. Ein solches Material ist beispielsweise unter dem Handelsnamen BaKaSeal von der Firma Bamberger Kalico GmbH, Bamberg kommerziell als Dichtmaterial verfügbar. Hier dient es durch seine Volumenvergrößerung zur Durchmesseraufweitung des Kerns 3, wobei der Rohrkörper 21 als starres Abstützelement für das Material 22 dient. In dem Rohrkörper 21 kann beispielsweise ein Gasspeicher für ein Reaktionsgas der Brennstoffzelle 1 gemäß den Fig. 1 und 2 angeordnet sein, was in Figur 5 aber nicht dargestellt ist.

Fig. 6 skizziert einen Kern 3, bei dem zwei Konuselemente 23 und 24 in einem elastischen Mantel 25 angeordnet sind. Das Konuselement 23 ist mit gegenläufigen Schlitzen 26 und 27 und einem Innenkonus 28 versehen. Das Konuselement 24 weist einen Außenkonus 29 auf, dessen Öffnungswinkel demjenigen des Innenkonus 28 entspricht, der auch an dem Außenkonus 29 anliegt. Durch Zusammendrücken der Konuselemente 23 und 24 in Richtung der Pfeile 30 und 31 drückt der Außenkonus 29 den Innenkonus 28 unter Aufweitung der Schlitze 26 und 27 auseinander. Hierdurch vergrößert sich der Außenumfang des Konuselements 29. In der Folge wird der Mantel 25 elastisch aufgewertet. Hiermit ist die gewünschte Aufweitung des Durchmessers des Kerns 3 erreicht. Bei der Ausführungsform des Kerns 3 gemäß Fig. 6 ist die Durchmesseraufweitung ebenso wie bei den Ausführungsformen gemäß den Fig. 3 und 4 reversibel.

### BEZUGSZEICHENLISTE

- 1 -: Brennstoffzelle
- 2 -: Schichtaufbau
- 3 -: Kern
- 4 -: Zylindermantel
- 5 -: Protonenaustauschmembran
- 6 -: Diffusorschicht
- 7 -: Diffusorschicht
- 8 -: Flächenelektrode
- 9 -: Flächenelektrode
- 10 -: Pfeil

- 11 -: Ende
- 12 -: Ende
- 13 -: Drehpfeil
- 14 -: Achse
- 15 -: Druckkammer
- 16 -: Wandung
- 17 -: Druckluft
- 18 -: Abstützkern
- 19 -: Hydraulikmedium
- 20 -: Druckquelle

- 21 -: Rohrkörper
- 22 -: Material
- 23 -: Konuselement
- 24 -: Konuselement
- 25 -: Mantel
- 26 -: Schlitz
- 27 -: Schlitz
- 28 -: Innenkonus
- 29 -: Außenkonus
- 30 -: Pfeil

- 31 -: Pfeil

## Patentansprüche

1. Verfahren zum Aufbringen einer Anpresskraft auf die Flächenelektroden von zylindermantel- oder wickelförmigen Brennstoffzellen oder Hydrolyseuren, die einen Schichtaufbau mit einer zentralen Protonenaustauschmembran, mit die Protonenaustauschmembran bedeckenden Diffusorschichten und mit den die Diffusorschichten rückwärtig abstützenden Flächenelektroden aufweist, wobei der Schichtaufbau auf einem Kern angeordnet ist, **dadurch gekennzeichnet, dass** der Durchmesser des Kerns (3) aufgewertet wird.

2. Verfahren nach Anspruch 1, **dadurch gekennzeichnet, dass** der Kern (3) durch hydraulische oder pneumatische Beaufschlagung einer Druckkammer (15) in dem Kern (3) aufgewertet wird.

3. Verfahren nach Anspruch 1, **dadurch gekennzeichnet, dass** der Kern (3) durch axiales Zusammendrücken von Konuselementen (23, 24) aufgewertet wird.

4. Verfahren nach Anspruch 1, **dadurch gekennzeichnet, dass** der Kern (3) durch thermisches oder chemisches Auslösen einer irreversiblen Volumenänderung aufgewertet wird.

5. Verfahren nach einem der Ansprüche 1 bis 4, **dadurch gekennzeichnet, dass** der Schichtaufbau (2) nach außen durch einen Zylindermantel (4) abgestützt wird, dessen Elastizität kleiner als diejenige des Schichtaufbaus (2) ist.

6. Brennstoffzelle oder Hydrolyseur mit einem eine zentrale Protonenaustauschmembran, die Protonenaustauschmembran bedekkende Diffusorschichten und die die Diffusorschichten rückwärtig abstützenden Flächenelektroden aufweisenden Schichtaufbau, wobei der Schichtaufbau auf einem Kern angeordnet ist, **dadurch gekennzeichnet, dass** der Durchmesser des Kerns (3) aufweitbar ist.

7. Brennstoffzelle oder Hydrolyseur nach Anspruch 6, **dadurch gekennzeichnet, dass** der Kern (3) eine hydraulisch oder pneumatisch beaufschlagbare Druckkammer (15) aufweist.

8. Brennstoffzelle oder Hydrolyseur nach Anspruch 7, **dadurch gekennzeichnet, dass** der Kern (3) axial zusammendrückbare Konuselemente (23, 24) aufweist.

9. Brennstoffzelle oder Hydrolyseur nach Anspruch 7, **dadurch gekennzeichnet, dass** das Volumen des Kerns (3) thermisch oder chemisch irreversibel vergrößerbar ist.

10. Brennstoffzelle oder Hydrolyseur nach Anspruch 9, **dadurch gekennzeichnet, dass** der Kern (3) zumindest einen Anteil aus einem Material (22) aufweist, dessen Volumen durch thermische Anregung irreversibel vergrößerbar ist.

11. Brennstoffzelle oder Hydrolyseur mit einem eine zentrale Protonenaustauschmembran, die Protonenaustauschmembran bedekkende Diffusorschichten und die die Diffusorschichten rückwärtig abstützenden Flächenelektroden aufweisenden Schichtaufbau, wobei der Schichtaufbau auf einem Kern angeordnet ist, **dadurch gekennzeichnet, dass** der Kern (3) zumindest einen Anteil aus einem Material (22) aufweist, dessen Volumen durch thermische Anregung irreversibel vergrößerbar ist, wobei diese Volumenvergrößerung zumindest teilweise ausgelöst ist.

12. Brennstoffzelle oder Hydrolyseur nach einem der Ansprüche 6 bis 11, **dadurch gekennzeichnet, dass** der Schichtaufbau (2) nach außen durch einen Zylindermantel (4) abgestützt ist, dessen Elastizität kleiner als diejenige des Schichtaufbaus (2) ist.
